# EUROPÄISCHE PATENTSCHRIFT

(11) **EP 0 448 913 B1**
(45) Veröffentlichungstag und Bekanntmachung des Hinweises auf die Patenterteilung: **16.02.1994**
(21) Anmeldenummer: 90810954.9
(22) Anmeldetag: 06.12.1990
(51) Int. Cl.: G01F 1/84

(54) **Nach dem Coriolisprinzip arbeitendes Massendurchfluss-Messgerät**
Mass flow meter working on the Coriolis principle
Débitmètre massique fonctionnant suivant le principe de Coriolis

(30) Priorität: 30.03.1990 EP 90810258
(43) Veröffentlichungstag der Anmeldung: 02.10.1991
(73) Patentinhaber: Endress + Hauser Flowtec AG, CH-4153 Reinach BL 1 (CH)
(72) Erfinder: Lang, Michael, W-7858 Weil-Haltingen (DE)
(74) Vertreter: Morstadt, Volker, Dipl.-Ing.

(56) Entgegenhaltungen:
- EP-A- 0 261 436
- WO-A-87/06691
- WO-A-88/02475
- WO-A-88/03642
- DE-U- 8 814 606

## Beschreibung

Bei den nach dem Coriolisprinzip arbeitenden Massendurchfluss-Messgeräten beruht die Massendurchflussmessung bekanntlich darauf, dass das durch die schwingenden geraden Messrohre strömende Fluid Corioliskräfte erfährt. Dadurch schwingt das Messrohr in den eingangsseitigen Rohrabschnitten phasenverschoben gegenüber den ausgangsseitigen. Die Grösse dieser Phasenverschiebung ist ein Mass für den Massendurchfluss.

Die Phasenverschiebung wird mittels Schwingungssensoren gemessen, die der mechanischen Schwingung eine für diese nach Betrag und Phase repräsentative elektrische Grösse zuordnen.

In der US-A 47 68 384 bzw. in der EP-A-0261436 ist ein nach dem Coriolisprinzip arbeitendes Massendurchfluss-Messgerät mit einem Trägerrohr, mit einem axial im Trägerrohr angeordneten Schwingsystem aus an beiden Enden in je einem Verteilerstück eingespannten geraden Messrohren und mit einem jedes Messrohr in der Mitte in Eigenresonanz-Biegeschwingungen versetzenden Schwingungserreger beschrieben, dessen Anker an einem der Messrohre und dessen Elektromagnet in der Wand des Trägerrohrs gegenüber dem Anker befestigt ist. Ferner hat dieses vorbeschriebene Massendurchfluss-Messgerät in, vorzugsweise gleichen, Abständen zu beiden Seiten des Schwingungserregers angeordnete Schwingungssensoren zur Erfassung der mechanischen Schwingungen und eine Auswerteschaltung zur Ermittlung des Massendurchflusses aus der Phasenverschiebung der von den Schwingungssensoren abgegebenen Sensorsignale abgegebenen Sensorsignale. Die genannte US-A 47 68 384 macht keine Angaben, für welche Nennweiten der angeschlossenen Rohrleitung dieses Massendurchflussmessgerät geeignet ist.

Bisherige handelsübliche Coriolis-Massendurchfluss-Messgeräte mit zwei geraden, parallelen Messrohren aus Titan haben eine maximale Nennweite der angeschlossenen Rohrleitung vom 80 mm. Bei der Entwicklung von Massendurchfluss-Messgeräten für die doppelte und noch grössere Nennweiten hat sich gezeigt, dass die spezielle Ausbildung des Schwingungserregers u.a. aus folgenden Gründen besonders wichtig ist:

Die auf dessen Anker von dessen Elektromagneten ausgeübte Kraft muss proportional dem Erregerstrom sein, damit die Nachführung der Eigenresonanzfrequenz elektronisch einfach möglich ist; würde die Kraft z.B. proportional zum Quadrat des Erregerstroms sein, würde die Anregung von Schwingungszuständen höherer Ordnung nicht unterbunden werden können.

Ferner soll der Schwingungserreger einen hohen Wirkungsgrad und geringe Wirbelstromverluste haben. Auch soll er mechanisch einfach aufgebaut, somit leicht herstellbar und damit kostengünstig sein. Schliesslich soll der gesamte magnetische Kreis des Erregersystems so ausgebildet sein, dass an denjenigen Stellen der Innenseite des Messrohrs, die im Bereich des Schwingungserregers liegen, eine Ablagerung ferromagnetischer Teilchen, die u.U. im zu messenden Fluid enthalten sind, möglichst vermieden wird.

Die Erfindung besteht in einem nach dem Coriolisprinzip arbeitenden Massendurchfluss-Messgerät für Nennweiten einer daran angeschlossenen Rohrleitung von grösser als cirka 150 mm; es hat ein Trägerrohr, ein axial im Trägerrohr angeordnetes Schwingsystem mit einem an beiden Enden eingespannten geraden Messrohr oder mit mehreren an beiden Enden in je einem Verteilerstück eingespannten geraden Messrohren und einen das bzw. jedes Messrohr in der Mitte in Eigenresonanz-Biegeschwingungen versetzenden Schwingungserreger; dessen weichmagnetischer Anker ist am Messohr bzw. an einem der Messrohre und dessen Elektromagnet mit seinem metallischen, nichtferromagnetischen Spulenbecher in der Wand des Trägerrohrs gegenüber dem Anker befestigt und enthält einen weichmagnetischen Kern; dessen in einer Erregerspule angeordneter Zentralteil trägt am dem Anker gegenüberliegenden Ende einen Dauermagnet-Einsatz, und dessen Randteile verlaufen mindestens teilweise längs der Aussenseite der Erregerspule; schliesslich hat das Massendurchfluss-Messsgerät in, bevorzugt gleichen, Abständen zu beiden Seiten des Schwingungserregers angeordnete Schwingungssensoren zur Erfassung der mechanischen Schwingungen und eine Auswerteschaltung zur Ermittlung des Massendurchflusses aus der Phasenverschiebung der von den Schwingungssensoren abgegebenen Sensorsignale.

In besonderer Ausgestaltung der Erfindung sind die Messrohre und deren Halterungen aus rostfreiem Stahl. Als weichmagnetische Kerne sind besonders E-Kerne oder Glockenkerne geeignet.

Die Figur 3 von DE-U-8814606.5 zeigt ein Elektromagnetanordnung für ein nach dem Coriolisprinzip arbeitendes Massendurchfluß-Meßgerät, die einen Spulenbecher für die Spule und einen davon umringten Spulenkern aufweist.

Die Erfindung wird nun anhand der Figuren der Zeichnung näher erläutert, in der ein Ausführungsbeispiel dargestellt ist.
- Fig. 1: zeigt eine zum Teil geschnittene Seitenansicht eines nach dem Coriolisprinzip arbeitenden Massendurchflussmessgeräts der Erfindung,
- Fig. 2: zeigt eine Querschnittsansicht des Massendurchflussmessgeräts von Fig. 1 entlang der Schnittlinie A-A,
- Fig. 3: zeigt eine Querschnittsansicht des Schwingungserregers in situ,
- Fig. 4: zeigt in Seitenansicht und Grundriss einen E-Kern, und
- Fig. 5: zeigt in Seitenansicht und Grundriss einen Glockenkern.

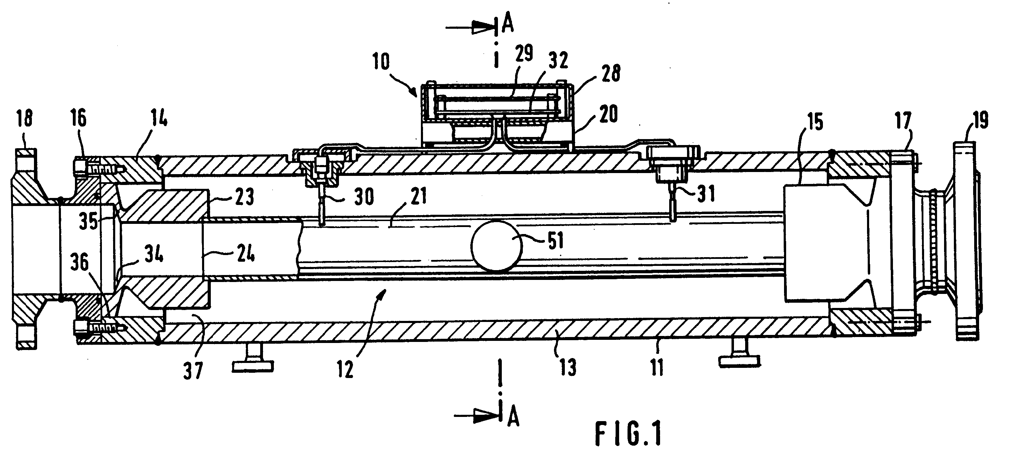

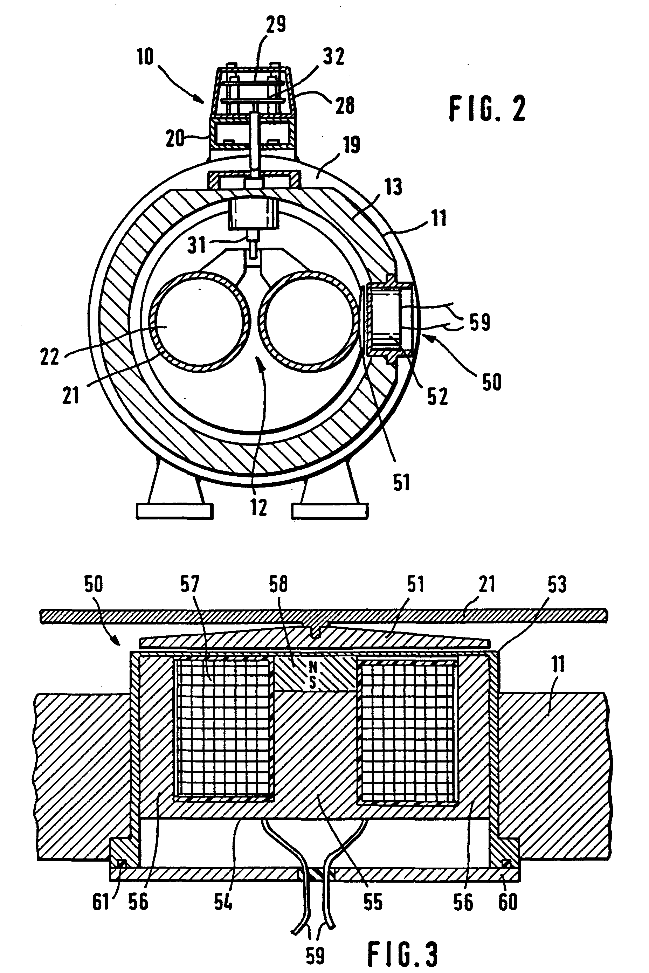

Das in Fig. 1 in einer teilweise geschnittenen Seitenansicht und in Fig. 2 im Querschnitt längs der Linie A-A von Fig. 1 dargestellte Massendurchflussmessgerät 10 weist ein massives Trägerrohr 11 auf, in dessen Innerem ein mechanisches Schwingsystem 12 angeordnet ist. Das Trägerrohr 11 besteht aus einem Rohrabschnitt 13, der an jedem Ende mit einem Trägerrohrflansch 14 verschweisst ist. An jedem Trägerrohrflansch ist ein Anschlussteil 16, 17 angeschraubt, das einen Flansch 18, 19 trägt. Mittels der Flansche 18 und 19 kann das Massendurchflussmessgerät in eine Rohrleitung eingefügt werden, durch die das zu messende Fluid strömt, dessen Massendurchfluss gemessen werden soll. Das Trägerrohr 11 kann von einem Blechgehäuse umgeben sein.

Das Schwingsystem 12 besteht aus zwei parallelen Messrohren 21, 22, die an beiden Enden jeweils durch ein als Halterung dienendes Verteilerstück 15, 23 so miteinander verbunden sind, dass sie strömungstechnisch parallelgeschaltet sind. Die Messrohre 21, 22 erstrecken sich über die ganze Länge des Rohrabschnitts 13, und die Verteilerstücke sind völlig gleich ausgebildet und angeordnet, doch ist in der Teilschnittansicht von Fig. 1 nur das im Innern des Trägerrorflansches 14 liegende Verteilerstück 23 zu sehen. Die folgende Beschreibung dieses Verteilerstücks gilt jedoch in gleicher Weise auch für das am anderen Ende des Schwingsystems angeordnete Verteilerstück 15.

Das Verteilerstück 23 enthält im Innern Strömungskanäle 24, die das durch den Anschlussteil 16 kommende Fluid gleichmässig auf die beiden Messrohre 21, 22 aufteilen. In entsprechender Weise vereinigt das am anderen Ende angebrachte Verteilerstück 15 die Strömung der beiden Messrohre, so dass diese durch das Anschlussteil 17 abfliesst. Natürlich kann die Strömungsrichtung auch umgekehrt sein.

In der Mitte des Trägerrohres 11 ist ein Schwingungserreger 50 (Fig. 2) angeordnet, der die beiden Messrohre 21, 22 in gegensinnige Biegeschwingungen versetzen kann, deren Schwingungsebene in der gemeinsamen Ebene der beiden Messrohre liegt, also senkrecht zur Zeichenebene von Fig. 1 steht. Der Schwingungserzeuger 50 besteht aus einem in der Wand des Rohrabschnitts 13 befestigten Elektromagneten 52, dem ein am Messrohr 21 befestigter weichmagnetischer Anker 51 gegenüberliegt. Wenn durch die Spule des Elektromagnets 52 ein Wechselstrom fliesst, wird durch die Wechselkraft zwischen dem Elektromagneten 52 und dem Anker 51 das Messrohr 21 in Biegeschwingungen versetzt, die über die Verteilerstücke 15, 23 auf das Messrohr 22 übergekoppelt werden, so dass schliesslich die beiden Messrohre 21, 22 gegenphasige Biegeschwingungen ausführen. Der sinusförmige Erregerstrom kommt von einer elektronischen Erregerschaltung, die in einem auf einem Blechgehäuse 20 befestigten Schaltungsgehäuse 28 untergebracht und nur durch ihre Schaltungsplatine 29 angedeutet ist. Die Erregungsschaltung ist so ausgebildet, dass das Schwingsystem 12 zu Eigenresonanzschwingungen angeregt wird.

Wie oben bereits erwähnt wurde, beruht die Messung des Massendurchflusses bei einem solchen Massendurchflussmesser darauf, dass das durch die schwingenden Messrohre 21, 22 strömende Fluid Corioliskräfte erfährt, die eine Phasenverschiebung der mechanischen Schwingungen zwischen den eingangs- und den ausgangsseitigen Rohrabschnitten zur Folge haben. Die Grösse dieser Phasenverschiebung ist ein Mass für den Massendurchfluss. Zur Messung dieser Phasenverschiebung sind zu beiden Seiten des Schwingungserregers 50 und in jeweils bevorzugt gleichem Abstand zwei Schwingungssensoren 30, 31 angebracht. Diese erfassen die mechanischen Schwingungen der Messrohre 21, 22 und setzen sie in elektrische Sensorsignale um, die für die Phasenlage der abgetasteten Schwingungen kennzeichnend sind. Die Sensorsignale sind einer elektronischen Auswerteschaltung zugeführt, die gleichfalls im Schaltungsgehäuse 28 untergebracht und nur durch ihre Schaltungsplatine 32 angedeutet ist. Die Auswerteschaltung ermittelt den Massendurchfluss aus der Phasendifferenz der ihr zugeführten Sensorsignale.

An das Verteilerstück 23 ist ein kurzer rohrförmiger Ansatz 34 angeformt, der mit dem Innenrand einer ringförmiger Membran 35 verbunden ist. Deren Aussenrand ist mit einem Haltering 36 verbunden, der in der Endbuchse 14 eingespannt und axial gegen die etwas nach innen vorspringende Stirnfläche des Anschlussstutzens 16 abgestützt ist. Das Schwingsystem 12 ist somit mittels der Membran 35 und der entsprechenden am anderen Ende angeordneten Membran axial im Trägerrohr 11 aufgehängt. Das Verteilerstück 23 hat kleinere Querschnittsabmessungen als der Hohlraum im Innern des Trägerrohrflansches 14, so dass rings um das Verteilerstück zwischen dessen Umfangfläche und der Innenfläche des Trägerrohrflansches 14 ein Zwischenraum 37 besteht. Der einzige Kontakt mit dem Schwingsystem 12 und dem Trägerrohr 11 besteht somit über die an den beiden Enden angebrachten Membranen 35.

Der rohrförmige Ansatz 34, die Membran 35 und der Haltering 36 können in einem Stück mit dem Verteilerstück der Halterung 23 gefertigt sein. Die Membran 35 ist dann einfach eine dünne Wand aus dem Material des Verteilerstücks, deren Dicke so gering ist, dass sich die Membran unter Belastung elastisch verformen kann. Natürlich könnte die Membran auch ein getrennt hergestelltes Teil sein, das am Aussenrand mit einem getrennten Haltering und am Innenrand mit dem Verbindungsstück auf geeignete Weise dicht verbunden wird, z.B. durch Verschweissen. Auf jeden Fall ist diese Baugruppe so gestaltet, dass einerseits die Ueberkopplung von dem einen Messrohr auf das andere Messrohr durch das massive Verteilerstück möglichst stark, die Ankopplung des Schwingsystems an das Aussenrohr durch die Membran andererseits jedoch möglichst schwach ist. Die Membranaufhängung des Schwingsystems 12 ergibt daher eine ausgezeichnete Entkopplung der mechanischen Biegeschwingungen von dem Trägerrohr 11 und von den Anschlussteilen 16. Ferner werden unterschiedliche Wärmeausdehnungen der Messrohre 21, 22 und des Trägerrohres 11 von der Membran 35 ausgeglichen, da sich diese unter einer axialen Belastung elastisch verformen kann. Die hierzu erforderliche Axialbewegung des Verteilerstücks ist infolge des Zwischenraums 37 ungehindert möglich.

Die Besonderheit des dargestellten Massendurchfluss-Messgeräts besteht in der Ausbildung des Schwingungserregers 50, wie sie in der Querschnittsansicht der Fig. 3 schematisch gezeigt ist. Wie bereits erwähnt wurde, ist der weichmagnetische Anker 51 am Messrohr 21 befestigt. Der Elektromagnet 52 umfasst einen Spulenbecher 53 aus nichtferromagnetischem Metall, der in der Wand des Trägerrohrs 11 gegenüber dem Anker 51 befestigt ist, und einen weichmagnetischen Kern 54, der genau in den Spulenbecher 53 eingepasst ist, und schliesslich eine Erregerspule 57, die einen Zentralteil 55 des Kerns 54 umfasst, während dessen Randteile 56 längs der Aussenseite der Erregerspule 57 verlaufen. Der Zentralteil 55 trägt an dem dem Anker 51 zugewandten Ende einen Dauermagnet Einsatz 58.

Durch einen Deckel 60 des Spulenbechers 53 hindurch sind die Zuleitungen 59 der Erregerspule 57 geführt, der mittels des Deckels 60 dicht verschlossen ist, wie durch einen gezeichneten O-Ring 61 veranschaulicht ist. Der Deckel 60 besteht ebenfalls aus weichmagnetischem Metall.

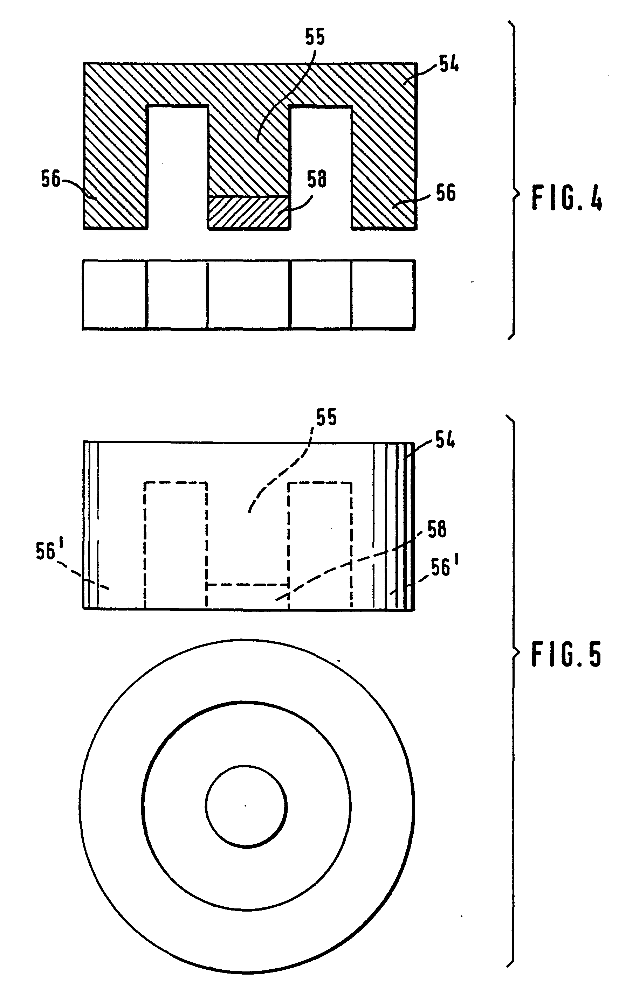

In Fig. 4 ist schematisch gezeigt, dass der Kern 54 in Ausgestaltung der Erfindung ein E-Kern sein kann, während nach Fig. 5 in anderer Ausgestaltung auch ein Glockenkern als Kern 54 vorgesehen werden kann. Bei diesem ist der Randteil 56' ringförmig geschlossen und umgreift die Erregerspule 57 seitlich vollständig, während beim E-Kern die beiden Randteile 56 nur entlang eines Teils der gesamten äusseren Mantelflächen der Erregerspule 57 verlaufen.

Durch den Dauermagnet-Einsatz 58 im Kern 54 wird erreicht, dass der elektrische Wirkungsgrad des Schwingungserregers 50 besonders hoch ist. Ferner ergibt sich durch die vom Einsatz 58 bedingte Vormagnetisierung des Magnetkreises der gewünschte lineare Zusammenhang zwischen Erregerstrom und Wechselkraft. Da ausserdem der Magnetkreis über den Anker 51 praktisch vollständig geschlossen ist, besteht die Gefahr der Ablagerung ferromagnetischer Partikel an der Innenseite des Messrohres nicht.

## Patentansprüche

1. Nach dem Coriolisprinzip arbeitendes Massendurchfluss-Messgerät (10) für Nennweiten einer daran angeschlossenen Rohrleitung von grösser als cirka 150 mm
- mit einem Trägerrohr (11),
- mit einem axial im Trägerrohr angeordneten Schwingsystem (12) mit einem an beiden Enden eingespannten geraden Messrohr (21, 22), oder mit mehreren an beiden Enden in je einem Verteilerstück (15, 23) eingespannten geraden Messrohren
- mit einem das bzw. jedes Messrohr in der Mitte in Eigenresonanz-Biegeschwingungen versetzenden Schwingungserreger (50),
- - dessen weichmagnetischer Anker (51) am Messrohr bew. an einem der Messrohre befestigt ist und
- - dessen Elektromagnet (52) mit seinem metallischen, nichtferromagnetischen Spulenbecher (53) in der Wand des Trägerrohrs (11) gegenüber dem Anker (51) befestigt ist und einen weichmagnetischen Kern (54) enthält,
- - - dessen in einer Erregerspule (57) angeordneter Zentralteil (55) am dem Anker gegenüberliegenden Ende einen Dauermagnet-Einsatz (58) trägt und
- - - dessen Randteile (56) mindestens teilweise längs der Aussenseite der Erregerspule verlaufen,
- mit in, vorzugsweise gleichen, Abständen zu beiden Seiten des Schwingungserregers (50) angeordneten Schwingungssensoren (30, 31) zur Erfassung der mechanischen Schwingungen und
- mit einer Auswerteschaltung (60) zur Ermittlung des Massendurchflusses aus der Phasenverschiebung der von den Schwingungssensoren abgegebenen Sensorsignale.

2. Massendurchfluss-Messgerät nach Anspruch 1 mit Messrohr(en) (21, 22) und Verteilerstücken (15, 23) aus rostfreiem Stahl.

3. Massendurchfluss-Messgerät nach Anspruch 1 oder 2 mit einem E-Kern oder einem Glockenkern.

## Claims

1. A mass flowmeter (10) working on the Coriolis principle and designed to be installed in pipelines having nominal diameters greater than about 150 mm, comprising
- a support tube (11),
- a vibrating system (12) disposed axially in the support tube and comprising a straight measuring tube (21, 22) mounted at both ends or two or more straight measuring tubes mounted at both ends in a distributor piece (15, 23),
- a vibration exciter (50) which sets the measuring tube or each of the measuring tubes into natural-resonance flexural vibration at the center and
- - whose soft-magnetic armature (51) is secured to the measuring tube or to one of the measuring tubes and
- - whose electromagnet (52) is mounted in the wall of the support tube (11) opposite the armature (51) via its metallic, nonferromagnetic coil can (53) and contains a soft-magnetic core (54)
- - - whose central portion (55), which is disposed in an energizing coil (57), carries a permanent-magnet insert (58) at the end opposite the armature, and
- - - whose edge portions (56) extend at least partly along the outside of the energizing coil,
- vibration sensors (30, 31) for sensing the mechanical vibrations which are mounted on both sides of, and at preferably equal distances from, the vibration exciter (50), and
- an evaluation circuit (60) for determining the mass rate of flow from the phase difference of the signals delivered by the vibration sensors.

2. A mass flowmeter as claimed in claim 1, comprising measuring tube(s) (21, 22) and distributor pieces (15, 23) of stainless steel.

3. A mass flowmeter as claimed in claim 1 or 2, comprising an E- or bell-shaped core.

## Revendications

1. Débitmètre massique (10) fonctionnant suivant le principe de Coriolis, conçu pour des diamètres nominaux des tuyauteries raccordées supérieurs à environ 150 mm, comprenant :
- un tube support (11) ;
- un système vibrant (12) disposé dans le sens axial à l'intérieur du tube support, ledit système vibrant comprenant un tube de mesure (21, 22) droit encastré à ses deux extrémités ou plusieurs tubes de mesure droits encastrés chacun à leurs deux extrémités dans un élément de distribution (15, 23) ;
- un générateur de vibrations (50) permettant de mettre le centre du ou de chaque tube de mesure en vibrations de flexion par résonance propre, générateur de vibrations
- - dont l'armature (51) en matériau magnétique doux est montée sur le ou l'un des tubes de mesure ;
- - dont l'électro-aimant (52) est monté dans la paroi du tube support (11) face à l'armature (51) par l'intermédiaire de son carter de bobine (53) en métal non ferromagnétique, ledit électro-aimant comprenant un noyau (54) magnétique doux
- - - dont la partie centrale (55) disposée dans une bobine d'excitation (57) porte à son extrémité opposée à l'armature un insert (58) qui est un aimant permanent, et
- - - dont les parties de bords (56) s'étendent, au moins partiellement, le long de la face externe de la bobine d'excitation ;
le débitmètre massique comprenant en outre
- des détecteurs de vibrations (30, 31) permettant de détecter les vibrations mécaniques, disposés, à des distances données, de préférence identiques, de part et d'autre du générateur de vibrations (50) ; et
- un circuit électronique d'évaluation (60) permettant de calculer le débit massique à partir du déphasage des signaux transmis par les détecteurs de vibrations.

2. Débitmètre massique selon la revendication 1, comprenant un ou plusieurs tubes de mesure (21, 22) et des éléments de distribution (15, 23) en acier inoxydable.

3. Débitmètre massique selon la revendication 1 ou 2, équipé d'un noyau en forme de E ou d'un noyau en forme de cloche.
